# FASCICULE DE BREVET EUROPEEN

(11) **EP 1 110 019 B1**
(45) Date de publication et mention de la délivrance du brevet: **29.10.2003**
(21) Numéro de dépôt: 99940270.4
(22) Date de dépôt: 02.09.1999
(51) Int. Cl.: F16L 15/06

(54) **ASSEMBLAGE FILETE DE DEUX TUBES METALLIQUES A COUPLE ELEVE DE VISSAGE**
METALLROHRSCHRAUBVERBINDUNG MIT HOHEM DREHMOMENT
THREADED CONNECTION OF TWO METAL TUBES WITH HIGH TIGHTENING TORQUE

(30) Priorité: 07.09.1998 FR 9811278; 06.01.1999 FR 9900161
(43) Date de publication de la demande: 27.06.2001
(73) Titulaire: VALLOUREC MANNESMANN OIL & GAS FRANCE, 59620 Aulnoye-Aymeries (FR); SUMITOMO METAL INDUSTRIES, LTD., Osaka-shi, Osaka 541-0041 (JP)
(72) Inventeur: NOEL, Thierry, F-59990 Sebourg (FR); VARENNE, Emmanuel, F-69400 Villefranche s/Saone (FR)
(74) Mandataire: Pellicani, Félix Angelo
(86) Numéro de dépôt international: FR9902084
(87) Numéro de publication internationale: WO00014441

(56) Documents cités:
- EP-A- 0 454 147
- EP-A- 0 713 952
- FR-A- 2 599 811

## Description

L'invention concerne les assemblages filetés de deux tubes métalliques à filetage conique et filets trapézoïdaux.

On connaît de tels assemblages, notamment utilisés pour constituer des colonnes de tubes de cuvelage ou de production ou des colonnes de tiges de forage pour les puits d'hydrocarbures.

Dans la suite du présent document, le terme " assemblage fileté de deux tubes métalliques " couvre aussi bien l'assemblage dit intégral entre deux tubes de grande longueur, que l'assemblage entre un premier tube de grande longueur et un second tube de faible longueur tel que, par exemple, un manchon.

L'American Petroleum Institute (API) définit :
- dans sa spécification API 5CT des tubes métalliques et des assemblages par filetage de tubes métalliques pour l'exploitation et le cuvelage de puits d'hydrocarbures,
- et dans sa spécification API 5B des formes standards de filetage conique pour de tels assemblages.

Les filets de ces assemblages peuvent être du type trapézoïdal et comporter alors sur chacun des éléments mâle et femelle un fond de filet, un sommet de filet et deux flancs, à savoir un flanc porteur et un flanc d'engagement.

Les fonds de filet et les sommets de filet sont le plus souvent parallèles au cône du filetage.

Les flancs porteurs sont dénommés ainsi parce qu'en portant l'un sur l'autre lorsque l'assemblage est soumis à des efforts de traction, par exemple du fait du poids des tubes, ils permettent à l'assemblage de supporter lesdits efforts de traction. Les flancs porteurs sont situés sur les filets à l'opposé des flancs d'engagement.

Lors du vissage d'un tel assemblage, compte tenu de la conicité des filetages, à un moment donné correspondant à une position relative donnée des éléments mâle et femelle, les fonds de filet d'un des éléments entrent en contact avec les sommets de filets de l'autre élément.

Si l'on poursuit le vissage de l'élément mâle dans l'élément femelle au-delà de cette position, les filets mâles viennent interférer radialement avec les filets femelles, ce qui conduit à un gonflement de l'élément femelle et à une contraction du mâle ; une telle interférence doit être limitée pour ne pas développer des contraintes ou des déformations excessives.

L'interférence diamétrale entre les points conjugués de deux surfaces de révolution qui interfèrent radialement est définie de manière générale comme la différence de diamètre de section droite des surfaces en ces points, différence mesurée avant assemblage et comptée positivement lorsque les deux surfaces une fois assemblées exercent une pression de contact entre les points conjugués.

Pour limiter ces contraintes ou ces déformations, on peut disposer une surface d'appui annulaire d'orientation sensiblement transversale par rapport à l'axe de l'assemblage sur chacun des éléments mâle et femelle, surfaces d'appui positionnées de façon telle qu'elles viennent en butée l'une sur l'autre à un moment donné du vissage et qu'elles définissent ainsi précisément une position de fin d'assemblage.

La position de fin d'assemblage est par exemple déterminée par le couple nécessaire pour arriver à cette position.

L'utilisation de surfaces d'appui en butée pour positionner l'assemblage présente d'autres avantages :
- mise sous tension des flancs porteurs des filetages de l'assemblage qui sont alors prêts à supporter les contraintes de traction auxquelles l'assemblage est susceptible d'être soumis en service,
- positionnement précis des éléments mâle et femelle permettant de garantir, lorsque chacun des éléments mâle et femelle de l'assemblage comporte une portée d'étanchéité qui interfère radialement avec celle disposée sur l'élément conjugué, une pression élevée de contact métal-métal entre les portées sans risque de plastifier celles-ci,
- risques réduits de dévissage accidentel du fait du couple de vissage à vaincre avant de pouvoir dévisser l'assemblage, ce couple étant bien défini et toujours supérieur à une valeur minimale.

Le brevet EP 488.912 décrit un tel assemblage possédant des filetages coniques vissés l'un dans l'autre, une paire de portées d'étanchéité métal-métal interférant radialement et une paire de surfaces d'appui en butée, à savoir une surface conique concave en extrémité de l'élément mâle et une surface annulaire convexe formant un épaulement intérieur sur l'élément femelle.

Un tel assemblage fileté peut être vissé avec des couples nominaux de vissage pouvant aller jusqu'à 34 kN.m (25000 lbf.ft) par exemple, ce qui est suffisant dans la plupart des cas.

Il peut néanmoins être nécessaire de visser l'assemblage avec des couples encore plus élevés, notamment dans le cas de tubes de cuvelage pour puits déviés multiples ou pour puits horizontaux permettant d'exploiter une large zone à partir d'un seul site.

L'utilisation de techniques de mise en rotation de la colonne comportant des tiges de forage en extrémité (" drilling liner ") permet en outre une meilleure cimentation des puits horizontaux mais nécessite des assemblages de tubes vissés avec des couples supérieurs au couple de mise en rotation de la colonne si l'on veut éviter une rotation des éléments filetés les uns par rapport aux autres lors de la mise en rotation de la colonne, une rotation entre éléments susceptible de modifier les caractéristiques d'usage des assemblages, notamment leur étanchéité.

Le tableau 1 ci-dessous donne une idée du niveau des couples de vissage souhaités pour de telles applications.

**Tableau 1 :**

| niveau de couple de vissage souhaité | | | |
|---|---|---|---|
| Diamètre extérieur de tube | | Niveau de Couple de vissage | |
| (mm) | ( " ) | ( kN.m) | ( lbf.ft) |
| 101,6 - 139,7 | 4" - 5"1/2 | 20-34 | 15000-25000 |
| 168,3 - 177,8 | 6"5/8 - 7" | 27-41 | 20000-30000 |
| 244,5 | 9"5/8 | 54-88 | 40000-65000 |

Les surfaces d'appui en butée ne peuvent supporter de tels niveaux de couple sans détérioration sauf si on augmente la largeur radiale des surfaces d'appui mais il faut alors mettre en oeuvre des tubes de très forte épaisseur qui peuvent être incompatibles avec les exigences d'utilisation.

Il est donc nécessaire d'utiliser d'autres moyens que les surfaces d'appui en butée pour absorber des couples de vissage élevés.

La demande de brevet WO 94/29627 décrit un assemblage fileté à filetage conique et filets trapézoïdaux dits coins en forme générale de queue d'aronde et plus particulièrement de demi-queue d'aronde.

Ces filets sont dits coins ou à largeur variable parce que la largeur des filets mâle et femelle varie d'une extrémité du filetage à l'autre et de manière coordonnée entre le filetage mâle et le filetage femelle.

Ces filets sont dits en demi-queue d'aronde parce qu'ils surplombent les fonds de filet d'un seul coté de ceux-ci, soit du côté des flancs porteurs, soit du côté des flancs d'engagement et parce que l'angle entre le flanc porteur et la normale à l'axe de l'assemblage et celui entre le flanc d'engagement et ladite normale sont tels que la largeur des filets est plus grande à leur sommet qu'à leur base.

Lorsque l'on engage l'élément mâle dans l'élément femelle selon ce document WO 94/29627, les sommets de filets les plus étroits font face aux fonds de filets les plus larges et il existe un important jeu axial entre les flancs conjugués des filetages.

Au fur et à mesure que l'on visse l'élément mâle dans l'élément femelle, le jeu axial diminue jusqu'à une position où les deux flancs mâles arrivent en contact avec leurs conjugués femelles.

Au-delà de cette position, les flancs femelles viennent fretter les flancs mâles et il s'ensuit une élévation très rapide de la courbe de couple de vissage en fonction de la rotation.

Un tel assemblage selon le document WO 94/25627 permet certes de faire passer un couple important de vissage compte tenu de la surface développée des filetages mais il présente plusieurs inconvénients notables.

Tout d'abord, les filets coins à largeur variable sont coûteux à usiner et délicats à contrôler.

En outre, les angles aigus des queues d'aronde ou des demi-queues d'aronde, disposés du côté flanc porteur et/ou du côté flanc d'engagement, constituent des angles vifs sensibles aux coups et les bavures issues de tels coups détériorent le fonctionnement de l'assemblage.

Ces angles vifs induisent également des effets d'entaille au pied des filets et par conséquent une plus grande fragilité en service.

On a cherché dans la présente invention à réaliser un assemblage fileté apte à être vissé sous un couple T de vissage élevé qui soit exempt de ces inconvénients et notamment un assemblage fileté dont l'usinage des éléments soit économique et qui puisse être facilement manipulé sur chantier.

On a en outre cherché à obtenir un assemblage fileté pour lequel le couple désiré de vissage est obtenu après une rotation notable, par exemple de l'ordre de un tour, voire davantage.

On a en outre cherché à ce que, dans certaines configurations, la pente de la courbe couple de vissage - rotation diminue à partir d'un niveau de couple donné et traduise ainsi une caractéristique d'auto-limitation du couple de vissage.

On a en plus cherché à obtenir un assemblage qui soit particulièrement étanche aux fluides intérieur et/ou extérieur, même après plusieurs vissages-dévissages.

L'assemblage fileté entre deux tubes métalliques selon la présente invention comprend un élément mâle en extrémité d'un premier tube vissé dans un élément femelle en extrémité d'un second tube.

L'élément mâle comporte extérieurement un filetage mâle conique à filets trapézoïdaux dont la largeur des sommets de filet est inférieure à celle de la base de filet.

L'élément femelle comporte intérieurement un filetage femelle conique à filets trapézoïdaux de forme conjuguée à celle du filetage mâle.

Par filetage femelle de forme conjuguée à celle du filetage mâle, on entend ici que la conicité et le pas du filetage femelle sont sensiblement identiques à ceux du filetage mâle et que la forme des filets femelles est sensiblement identique à celle des filets mâles, l'inclinaison des flancs porteurs et d'engagement des filets femelles sur l'axe de l'assemblage étant notamment identique à celle des flancs correspondants des filets mâles, la largeur des sommets de filet femelle étant inférieure à celle de leur base comme sur les filets mâles. Bien sûr, réciproquement, le filetage mâle est alors de forme conjuguée à celle du filetage femelle.

La largeur des sommets de filet sur chacun des filetages mâle et femelle est supérieure à celle des fonds de filet du filetage conjugué.

L'élément mâle est positionné par vissage dans l'élément femelle dans une position relative de ces deux éléments située au-delà de celle où, au cours du vissage, les deux flancs des filets mâles arrivent en contact avec les deux flancs des filets femelles, de manière à induire un frettage axial des filets mâles par les filets femelles et réciproquement.

Compte tenu de la forme conjuguée des filets trapézoïdaux mâles et femelles utilisés et du fait que leur largeur en sommet de filet est inférieure à celle à la base, les filets mâles et femelles pénètrent radialement en coin dans les creux conjugués au fur et à mesure de la progression axiale des filets au cours du vissage et induisent ainsi au-delà de la position de contact des deux flancs conjugués un frettage axial des filets mâles par les filets femelles et réciproquement.

Ce frettage sur toute la surface des flancs se traduit par la possibilité d'absorber dans des filets un niveau élevé de couple T de vissage.

Les caractéristiques de tels filets font qu'ils peuvent être réalisés de manière économique, qu'ils sont commodément contrôlés et peu fragiles à l'usage.

La demande de brevet EP 454.147 décrit aussi un assemblage fileté avec filetage conique et filets trapézoïdaux dont la largeur des sommets de filet femelle est plus grande que celle des fonds de filet mâle et qui, en fin d'assemblage, présente les deux flancs du filetage d'un élément en contact avec ceux du filetage de l'élément conjugué, au moins sur une partie du filetage.

Mais, selon ce document EP 454147, on ne cherche à réaliser qu'un simple contact, même d'ailleurs seulement partiel, entre flancs conjugués de manière à ce que, au cas où l'assemblage serait soumis à des contraintes de compression après avoir été soumis à des contraintes de traction, il n'y ait pas repositionnement des flancs d'engagement du fait d'un jeu axial préexistant au niveau de ces derniers, repositionnement susceptible d'induire une plastification du métal, notamment des portées d'étanchéité, et de ce fait d'induire un risque ultérieur de fuite lorsque l'assemblage serait de nouveau soumis à des contraintes de traction. Pour obtenir un tel simple contact des flancs des filets en fin d'assemblage, le document EP 454147 prévoit impérativement l'emploi de moyens de positionnement des éléments, à savoir une surface d'appui transversale sur chaque élément, chaque surface d'appui étant apte à être mise en butée avec celle de l'élément conjugué. Les flancs d'engagement conjugués mâle et femelle sont disposés de façon à ménager entre eux un jeu axial minimal avant l'arrivée en contact des surfaces d'appui, jeu axial qui se réduit à zéro ou quasiment zéro lorsque les surfaces d'appui sont mises en butée. Ces surfaces transversales en butée permettent en outre classiquement d'absorber le couple de vissage, le document EP 454147 ne divulguant aucunement un assemblage fileté à couple de vissage élevé.

Dans la présente invention, en fin de vissage, l'interférence diamétrale entre les sommets de filet de chacun des deux filetages mâle et femelle et les fonds de filet du filetage conjugué est préférentiellement négative ou nulle.

Très préférentiellement pour ce faire lorsque les deux flancs du filetage mâle arrivent en contact avec leurs conjugués du filetage femelle au cours du vissage, il subsiste un jeu radial entre sommets et fonds de filets conjugués au moins égal à 0,15 mm.

En variante préférentielle, l'interférence diamétrale entre les sommets de filet d'un seul des deux filetages mâle ou femelle et les fonds de filet du filetage conjugué est positive en fin de vissage.

Préférentiellement pour obtenir un frettage axial efficace des filets par effet de coin, l'angle δ entre flanc porteur et flanc d'engagement des filets mâle ou femelle est inférieur ou égal à 20°.

Il est très préférentiellement compris entre 7° et 20° et plus particulièrement voisin de 10°.

De préférence encore, les sommets de filet de chacun des filetages mâle et femelle surplombent les fonds de filet du même filetage du côté des flancs porteurs, l'angle α entre le flanc porteur et la normale à l'axe de l'assemblage étant compté de ce fait négativement et ayant une valeur comprise entre 0 et -15°.

Avantageusement si l'on souhaite atténuer un effet de coin trop brutal entraînant une pente dT/dN trop élevée de la courbe du couple de vissage en fonction du nombre de tours, au moins un des filetages mâle et/ou femelle comporte une gorge débouchant en sommet de filet sur tout ou partie de la longueur du ou des filetages.

Une telle gorge augmente la souplesse du filet et diminue quelque peu les forces de frettage, d'autant plus que la gorge possède une profondeur et une largeur importantes. Il s'ensuit une nette diminution de la pente dT/dN de la courbe du couple de vissage en fonction du nombre de tours au prix d'une légère diminution du couple maximal de vissage. On peut ainsi optimiser l'ensemble des deux caractéristiques couple maximal de vissage et pente dT/dN.

On connaît par le document FR 2.408.061 des assemblages filetés à filets trapézoïdaux dans lesquels un des filets présente une sorte de gorge débouchant en sommet de filet.

Mais cette gorge est étroitement associée à des structures de flancs de filet permettant d'obtenir un assemblage dit autobloquant, c'est-à-dire résistant au dévissage : pour cela, l'inclinaison des flancs de filet avec gorge est différente de celle des flancs de filet sans gorge et est telle que la largeur de la gorge à son débouché diminue lors du vissage sous les efforts de flexion résultant des écarts d'orientation des flancs de filets conjugués.

Ce document ne divulgue aucunement la fonction des moyens de l'assemblage selon l'invention et ne s'applique pas à des filets possédant des caractéristiques selon l'invention, notamment une forme conjuguée des filets mâles et femelles.

Préférentiellement selon l'invention, la gorge a une profondeur au plus égale à la hauteur de filet et la largeur de la gorge à son débouché en sommet de filet est au plus égale aux 2/3 de la largeur de filet, la hauteur de filet étant la distance radiale mesurée perpendiculairement à l'axe de l'assemblage entre le cône enveloppe des sommets de filet et celui des fonds de filet et la largeur de filet étant mesurée parallèlement à l'axe de l'assemblage à mi-hauteur de filet.

Préférentiellement encore, la gorge a, selon un plan longitudinal axial, un profil en U à branches parallèles ou non ou en V avec un fond arrondi.

Très préférentiellement, le fond arrondi de la gorge présente un rayon au moins égal à 0,2 mm pour éviter les concentrations de contraintes en fond de gorge.

Préférentiellement encore, chacun des éléments mâle et femelle comprend au moins une portée d'étanchéité, chaque portée d'étanchéité mâle ayant une orientation sensiblement longitudinale et interférant radialement avec une portée d'étanchéité conjuguée femelle en fin d'assemblage de manière à réaliser l'étanchéité de l'assemblage.

Préférentiellement toujours, chacun des éléments mâle et femelle comprend au moins une surface d'appui d'orientation sensiblement transversale, au moins une surface d'appui mâle venant en butée contre une surface d'appui femelle en fin d'assemblage pour positionner précisément les portées d'étanchéité et définir ainsi leur interférence.

De telles surfaces d'appui n'ont par contre pas pour fonction de définir la position de fin d'assemblage à l'arrivée en contact des flancs d'engagement des filets.

Les figures suivantes illustrent des modes particuliers et non limitatifs de réalisation de l'invention.
La figure 1 représente en demi-coupe axiale une extrémité de tube ou de manchon comportant un élément femelle d'un assemblage fileté selon l'invention.
La figure 2 représente en demi-coupe axiale une extrémité d'un autre tube comportant un élément mâle d'un assemblage fileté selon l'invention.
La figure 3 représente en demi-coupe axiale l'assemblage fileté obtenu après vissage des éléments des figures 1 et 2.
La figure 4 représente schématiquement en demi-coupe axiale un détail de quelques filets femelles de l'élément femelle de la figure 1.
La figure 5 représente schématiquement en demi-coupe axiale un détail de quelques filets mâles de l'élément mâle de la figure 2.
La figure 6 représente schématiquement en demi-coupe axiale un détail de quelques filets selon figures 4 et 5 en cours d'assemblage, l'assemblage étant du type de la figure 3.
Les figures 7 et 8 représentent une variante des figures 4 et 5.
La figure 9 représente schématiquement en demi-coupe axiale un détail de quelques filets selon figures 7 et 8 une fois assemblés
La figure 10 représente une courbe du couple T de vissage en fonction du nombre de tours N de vissage sur deux variantes de l'assemblage de la figure 6.
La figure 11 représente une variante de la figure 4 avec une gorge dans les filets femelles.
La figure 12 représente une variante de la figure 5 avec une gorge dans les filets mâles.
La figure 13 représente une courbe du couple T de vissage en fonction du nombre de tours N de vissage sur deux variantes de l'assemblage des éléments des figures 11 et 12.
La figure 14 représente l'application de la présente invention à un assemblage fileté manchonné.

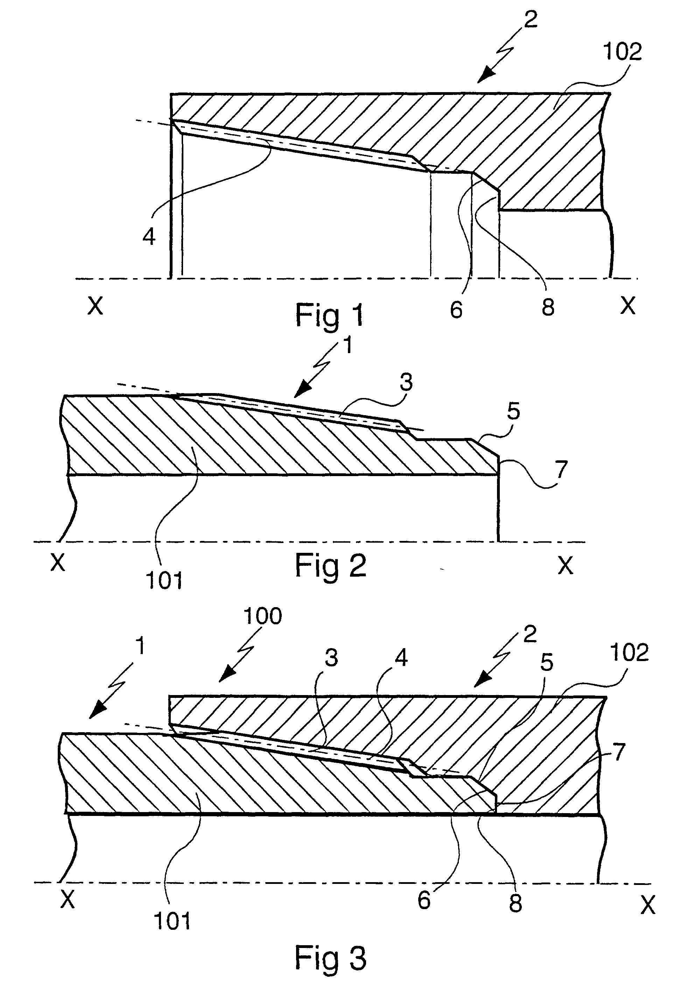

La figure 3 représente un assemblage fileté 100 entre un élément mâle 1 en extrémité d'un premier tube métallique 101 et un élément femelle 2 en extrémité d'un second tube métallique 102 qui peut être un tube de grande longueur ou un manchon. De tels assemblages filetés permettent par exemple de constituer des colonnes de tubes de cuvelage ou de production pour les puits d'hydrocarbures.

L'élément mâle 1 représenté à la figure 2 comporte sur sa surface extérieure un filetage mâle conique 3 à filets trapézoïdaux et son extrémité qui est aussi l'extrémité du premier tube présente une surface d'extrémité mâle 7 annulaire et transversale.

L'élément femelle 2 représenté à la figure 1 comporte sur sa surface intérieure un filetage femelle conique 4 conjugué du filetage mâle 3.

L'assemblage des tubes 101, 102 est obtenu en vissant le filetage mâle 3 de l'élément mâle 1 dans le filetage femelle 4 de l'élément femelle 2.

L'assemblage de la figure 3 comporte optionnellement sur chacun des éléments des moyens additionnels lorsque l'on désire que l'assemblage soit particulièrement étanche, à savoir :
a) sur l'élément mâle, une portée d'étanchéité mâle 5 extérieure et conique dont la conicité est en général supérieure à celle du filetage mâle 3; la conicité de la portée d'étanchéité mâle 5 rapportée au diamètre est par exemple de 20%;
b) sur l'élément femelle:
   - une portée d'étanchéité femelle 6 intérieure et conique dont la conicité est sensiblement identique à celle de la portée d'étanchéité mâle 5,
   - un épaulement intérieur avec une surface d'appui 8 annulaire et transversale.

La surface d'extrémité mâle 7 peut être de manière connue en soi conique concave de demi-angle au sommet très ouvert, par exemple 75°, la surface d'appui femelle 8 étant dans ce cas convexe de même demi-angle au sommet.

Les moyens additionnels 5, 6, 8 qui sont optionnels vis-à-vis de l'invention, fonctionnent de la manière suivante sur l'assemblage 100.

La portée d'étanchéité mâle 5 interfère radialement avec la portée d'étanchéité femelle 6, c'est-à-dire que son diamètre en un point de référence est avant assemblage supérieur au diamètre du point conjugué de la portée d'étanchéité femelle 6, diamètre également mesuré avant assemblage.

Au cours du vissage, une fois le contact entre portées d'étanchéité obtenu, la poursuite du vissage induit une interférence diamétrale croissante des portées d'étanchéité.

La position précise de fin d'assemblage est déterminée par la mise en butée de la surface d'extrémité mâle 7 contre la surface d'appui 8 de l'épaulement intérieur femelle, ce qui définit une valeur précise d'interférence entre les portées d'étanchéité 5, 6.

La position de fin d'assemblage peut notamment être repérée par une valeur donnée du couple de vissage.

La forme conique concave-convexe des surfaces d'appui 7, 8 empêche le déboîtement des surfaces d'appui et augmente la pression de contact des portées d'étanchéité.

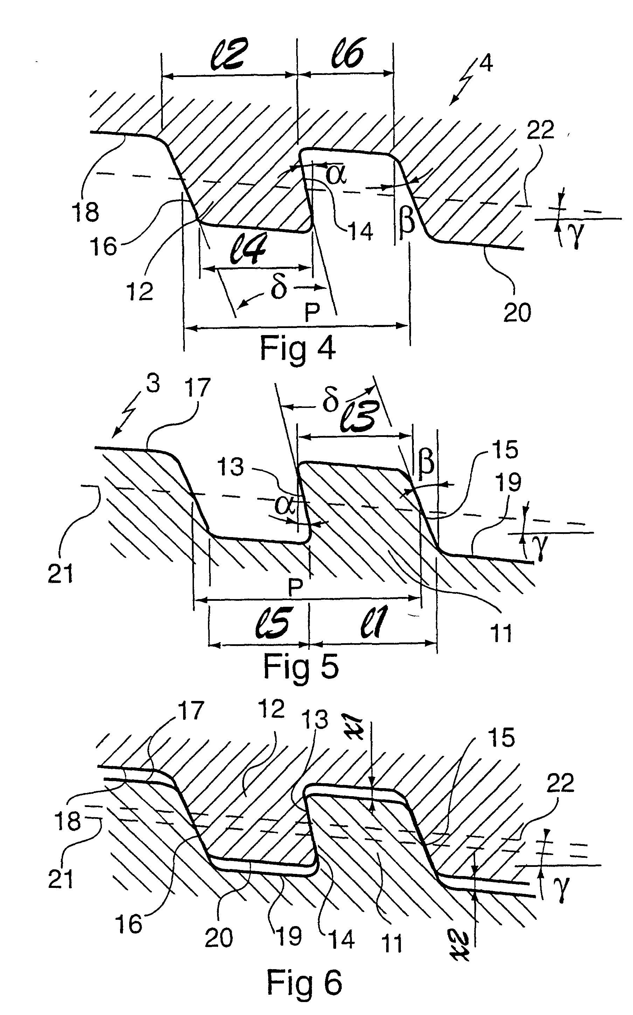

Les figures 4, 5 et 6 précisent les caractéristiques de filetages mâle et femelle d'un assemblage selon l'invention.

Le filetage mâle 3 (fig. 5) est un filetage conique de pas P dont la ligne directrice 21 de la surface primitive (ou en abrégé ligne primitive) est inclinée d'un angle γ sur l'axe de l'assemblage tel que γ = arc tg (TT/200), TT étant la conicité du filetage rapportée au diamètre et exprimée en %.

Les filets mâles 11 sont des filets trapézoïdaux présentant un sommet de filet 17, deux flancs 13 et 15 et sont séparés par un fond de filet 19.

Les sommets de filet 17 et les fonds de filet 19 sont parallèles à la ligne primitive mâle 21.

Les flancs comprennent un flanc porteur 13 et un flanc d'engagement 15, ce dernier étant tourné vers la surface d'extrémité mâle 7.

Les flancs porteur 13 et d'engagement 15 sont respectivement inclinés d'un angle α et β par rapport à la normale à l'axe de l'assemblage et présentent entre eux un angle δ.

Les sommets de filet 17 surplombent les fonds de filet 19 du côté des flancs porteurs 13 dans la représentation de la figure 5 de manière à éviter un déboîtement des filets lors de l'assemblage. Par convention, l'angle α est alors compté négativement, l'angle β du côté non surplombant étant compté positivement.

L'angle δ est égal à la somme algébrique de (α+β) et son sommet est dirigé vers l'extérieur du filetage mâle de sorte que les filets mâles 11 possèdent une largeur *l1* à leur base supérieure à celle *l3* à leur sommet.

Le filetage femelle 4 (fig. 4) présente des caractéristiques conjuguées de celles du filetage mâle 3.

La ligne primitive femelle 22 du filetage femelle est inclinée d'un angle γ sur l'axe de l'assemblage, identique à celui de l'inclinaison de la ligne primitive mâle 21.

Les sommets 20 et fonds 18 de filet femelle sont parallèles à la primitive femelle 22.

Les flancs porteurs 14 et d'engagement 16 de filet femelle sont inclinés respectivement d'un angle α et β par rapport à la normale à l'axe de l'assemblage et font entre eux un angle δ, chacun de ces angles étant identique à l'angle mâle correspondant.

La largeur *l3* du sommet de filet mâle 17 est légèrement supérieure à la largeur *l6* du fond du filet femelle 18, par exemple de 0,2 mm.

La largeur *l4* du sommet de filet femelle 20 est légèrement supérieure à la largeur *l5* du fond du filet mâle 19, par exemple de 0,2 mm.

Lorsque l'on visse le filetage mâle 3 dans le filetage femelle 4, à un moment donné illustré par la figure 6, les deux flancs 13, 15 des filets mâles 11 viennent en contact avec les deux flancs 14, 16 des filets femelles 12 sur sensiblement toute la hauteur de ces flancs.

Ceci résulte du fait que la largeur des sommets du filet mâle et femelle *l3*, *l4* est supérieure à la largeur des fonds conjugués *l6, l5* et de la forme trapézoïdale conjuguée des filets avec *l1*> *l3* et *l2* > *l4*.

Si l'on poursuit le vissage, les filets mâles 11 pénètrent radialement en coin dans les creux femelles et de même les filets femelles 12 s'enfoncent radialement en coin dans les creux mâles.

Il y a de ce fait frettage axial des flancs des filets mâles et femelles et il est nécessaire d'augmenter fortement le couple pour poursuivre le vissage. Il s'ensuit une très forte pente dT/dN de la courbe du couple en fonction du nombre de tours N du vissage, compte tenu de la surface de flancs frettants qui sont en contact sur sensiblement toute leur hauteur et sur leur longueur.

La pente dT/dN est une fonction du module d'élasticité du métal des éléments, de la conicité TT du filetage, de la longueur du filetage, du diamètre moyen de celui-ci, de la hauteur de filet, de l'angle δ entre flancs d'un même filet et du coefficient de frottement entre filets mâle et femelle. Il est donc possible de prévoir la pente dT/dN.

Pour que les filets mâle et femelle puissent pénétrer radialement dans les creux conjugués, il est avantageux que l'angle δ du coin formé par les flancs des filets 11, 12 ne soit pas trop grand et reste, par exemple, inférieur à 20°.

Un angle δ trop faible n'est pas non plus souhaitable car le phénomène de coin serait plus difficile à mettre en oeuvre : on préférera choisir l'angle δ dans l'intervalle [7°, 20°], un angle δ de 10° étant de fait préféré.

Le choix de filets à flanc porteur 13, 14 d'angle α négatif, par exemple d'angle α = -3° permet en outre de choisir un angle β de +13° suffisamment incliné pour permettre un engagement facile des filets.

La valeur maximale du couple de vissage T admissible est déterminée par la limite d'élasticité du métal des éléments. Il est donc également possible de prévoir la valeur maximale du couple de vissage T admissible.

Pour obtenir un effet de coin optimal sans contraintes excessives dans les éléments mâle et femelle et permettre l'écoulement de la graisse qui est disposée sur les filets i avant assemblage, on peut s'arranger pour supprimer toute interférence radiale entre les sommets de filet (17, 20) de chacun des deux filetages mâle et femelle (3, 4) et les fonds de filet (18, 19) du filetage conjugué (4, 3); On concevra donc dans ce cas les filets et notamment leur largeur pour que l'interférence diamétrale entre les sommets de filet de chacun des deux filetages mâle et femelle et les fonds de filet du filetage conjugué soit négative ou nulle en fin de vissage.

On peut notamment concevoir les filets pour qu'au moment du premier contact sur les deux flancs (fig. 6), la valeur *x1* du jeu radial entre sommet de filet mâle 17 et creux de filet femelle 18 et celle *x2* du jeu radial entre sommet de filet femelle 20 et creux de filet mâle 19 soient au moins égales à 0,15 mm.

A défaut de supprimer toute interférence radiale entre les sommets de filet de chacun des deux filetages mâle et femelle (3, 4) et les fonds de filet du filetage conjugué (4, 3), on peut, en variante, concevoir les filets 71, 72, notamment leur largeur et leur hauteur, pour créer une interférence diamétrale positive entre les sommets de filet de l'un des deux filetages mâle ou femelle et les fonds de filet du filetage conjugué en fin de vissage.

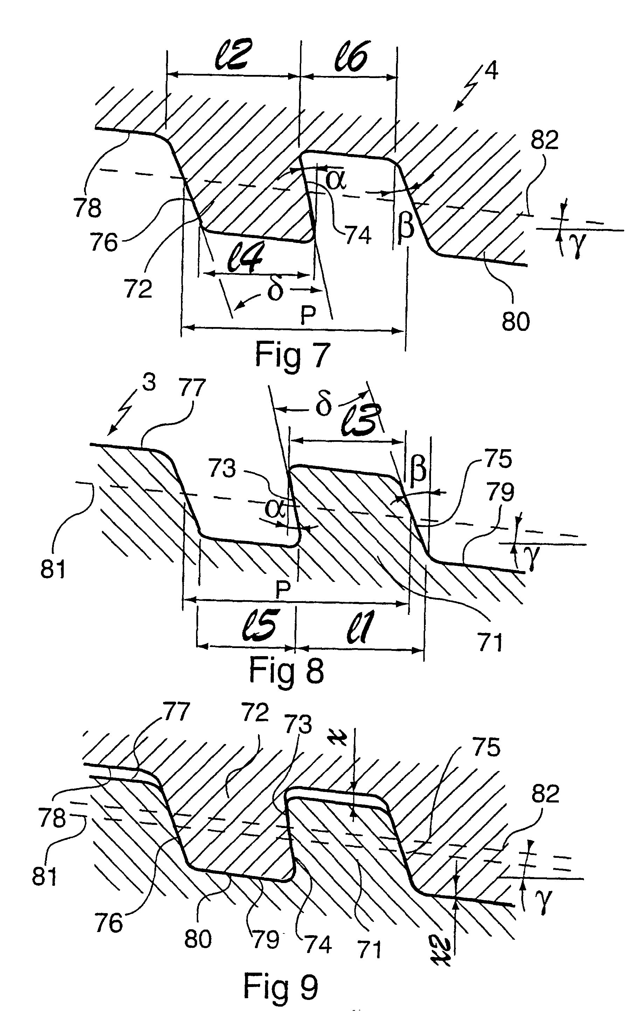

Une telle variante est représentée aux figures 7, 8 et 9 pour respectivement le filetage femelle 4, le filetage mâle 3 et l'assemblage des deux : en fin d'assemblage (figure 9), il existe un jeu *x* entre les sommets de filet mâle 77 et les fonds de filet femelle 78 alors que les sommets de filet femelle 80 interfèrent radialement avec les fonds de filet mâle 79. Une telle disposition influe relativement peu sur le niveau de couple de vissage.

Préférentiellement pour cette variante, le contact entre sommets de filet femelle 80 et fonds de filet mâle 79 se produit avant le contact entre les flancs conjugués 73, 74, 75, 76.

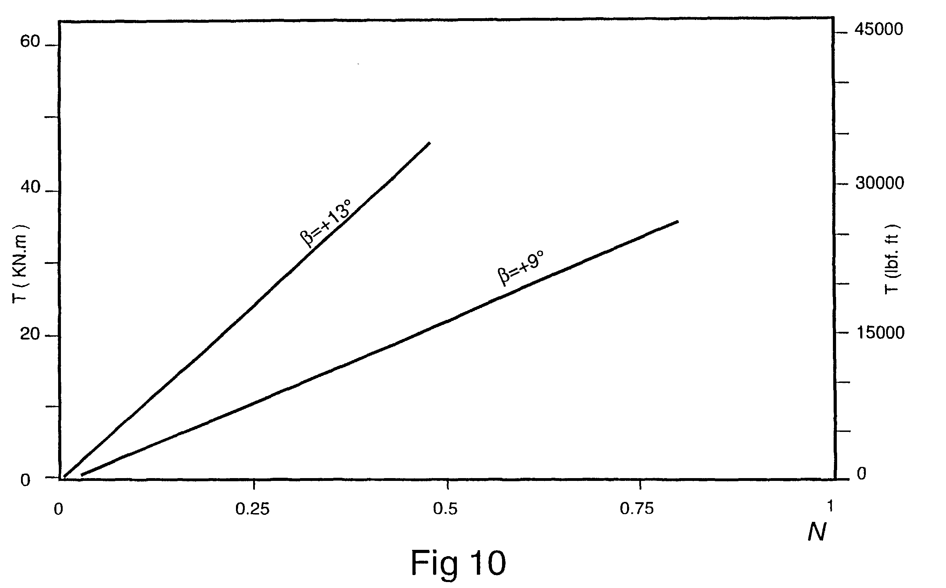

La figure 10 montre une courbe de couple de vissage T en fonction de nombre de tours N pour la géométrie suivante de tubes d'un assemblage selon la figure 6:
- diamètre de tubes : 177,80 mm
- épaisseur de tubes : 10,36 mm (29 lb/ft)
- matériau de tubes : acier peu allié de limite d'élasticité ≥ 551 MPa
- filetages à 5 filets par pouce
- conicité filetages TT = 6,25% sur le diamètre ( γ = 1,79°)
- angle α de flanc porteur = -3°
- angle β de flanc d'engagement : +9° et +13°
- angle δ entre flancs : 6° et 10°.

Sur ce graphique, l'abscisse N = 0 correspond au premier contact sur les deux flancs 13-14 et 15-16 des filets conjugués.

Pour les filets avec β = +9° (δ = 6°), on a obtenu un couple de plus de 35 kN.m (26 000 lbf.ft) en 0,8 tour, ce qui correspond à une pente de 44,5 kN.m/tour.

Pour les filets avec β = +13° (δ = 10°), on a obtenu un couple de 45,9 kN.m (33 850 lbf.ft) en 0,47 tour, ce qui correspond à une pente de 97,5 kN.m/tour.

Un tel filetage à flancs de filets frettants permet de visser les éléments mâle et femelle avec un couple très élevé sans qu'il y ait besoin d'une butée mais un tel couple est alors obtenu après une rotation d'une fraction de tour des éléments mâle et femelle, qui peut s'avérer insuffisante notamment si l'on souhaite disposer des portées d'étanchéité sur les éléments mâle et femelle telles que, par exemple, celles 5, 6 de la figure 3.

Le développement d'une pression de contact donnée entre de telles portées d'étanchéité nécessite en effet une rotation d'un élément par rapport à l'autre de l'ordre d'un tour après la mise en contact des portées d'étanchéité et un positionnement précis des éléments mâle et femelle en fin d'assemblage, positionnement obtenu à l'aide d'une butée constituée de deux surfaces transversales en appui telles que 7, 8 sur la figure 3.

Il est de ce fait difficile de garantir une étanchéité satisfaisante en service sur un assemblage fileté avec des filets à flancs frettants du type des figures 4, 5, 6, des portées d'étanchéité et des surfaces transversales d'appui en butée du type de la figure 3, compte tenu des tolérances nécessaires de fabrication des éléments mâle et femelle.

La diminution de l'angle δ entre flancs de filets permettrait certes de réduire la pente de la courbe de couple de vissage en fonction du nombre de tours mais, à moins d'utiliser un angle α très négatif, inférieur à -15°, ce qui n'est pas désirable, il faudrait diminuer fortement l'angle β sur les flancs d'engagement, ce qui n'est pas non plus souhaité.

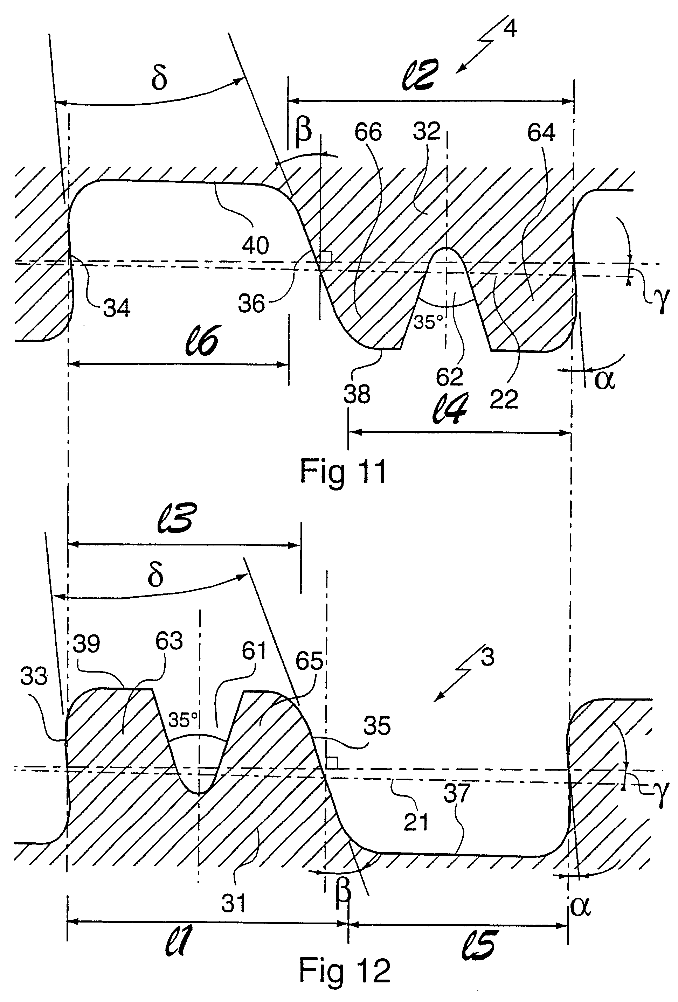

Les formes de filets illustrées aux figures 11 et 12 permettent de résoudre les problèmes de compatibilité entre des valeurs élevées du couple nominal de vissage et une valeur pas trop élevée, de l'ordre de 10 kN.m/tour par exemple, de la pente dT/dN de la courbe du couple en fonction du nombre de tours.

Les filets des figures 11 et 12 sont particulièrement avantageux dans le cas d'un assemblage avec portées d'étanchéité et butées du genre de la figure 3.

Les filets mâles 31 de la figure 12 présentent comme sur la figure 5 un flanc porteur 33 incliné d'un angle α négatif par rapport à la normale à l'axe de l'assemblage, un flanc d'engagement 35 incliné d'un angle β positif par rapport à cette même normale, un sommet de filet 39 et sont séparés par un fond de filet 37.

Les filets femelles 32 de la figure 11 présentent des caractéristiques correspondant à celles des filets mâles 31 de la figure 12 avec un flanc porteur 34, un flanc d'engagement 36, un sommet de filet 38 et un fond de filet 40 ayant même pas et même orientation que ceux des filets mâles 31 par rapport à l'axe de l'assemblage.

La largeur des sommets de filet mâle et femelle 39, 38 est supérieure à celle des fonds de filet conjugués 40, 37 de sorte qu'à un moment donné du vissage, les flancs mâles 33, 35 sont tous deux en contact avec leurs conjugués femelles 34, 36 alors qu'il subsiste un jeu radial entre sommets de filet 39, 38 et fonds de filet conjugué 40, 37 mais on pourrait aussi utiliser une variante non représentée dans laquelle il y a interférence radiale positive entre le sommet de filet d'un seul filetage et le fond de filet conjugué.

Le filet mâle 31 présente une gorge 61 débouchant en sommet de filet mâle 39, gorge dont le profil est en V à fond arrondi et dont l'axe du V est sensiblement normal à l'axe de l'assemblage.

La profondeur de la gorge 61, mesurée radialement est égale à 65% de la hauteur du filet mâle 31 et son fond est un arc de cercle de rayon 0,4 mm.

L'angle entre les deux branches du V de la gorge 61 est de 35° et induit sur le filet mâle 31 de la figure 12 une largeur de gorge à son débouché en sommet de filet égale à 34% de la largeur de filet mâle prise à mi-hauteur.

Le filet femelle 32 présente une gorge 62 débouchant en sommet de filet femelle 38, de même géométrie que la gorge 61 dans le filet mâle 31 et disposée dans le filet femelle de la même façon que la gorge 61.

De telles gorges 61, 62 transforment chacun des filets 31, 32 soumis à des contraintes de compression sur les deux flancs 33, 34, 35, 36 en deux poutres encastrées 63+65, 64+66, soumises à des contraintes de flexion.

La souplesse qui en résulte induit une diminution des forces de frettage lorsque l'on visse l'assemblage au-delà du point de contact simultané des flancs et par conséquent une diminution de la pente dT/dN de la courbe du couple de vissage en fonction de la rotation.

La profondeur de gorge et sa largeur à son débouché en sommet de filet sont des paramètres sur lesquels on peut jouer pour obtenir une pente dT/dN de la courbe de couple de vissage en fonction de la rotation qui ne soit pas trop élevée, qui reste par exemple de l'ordre de 20 kN.m/tour.

La profondeur de gorge doit être inférieure ou égale à la hauteur de filet car autrement, on affaiblirait la structure de l'assemblage de manière inacceptable.

La largeur de gorge à son débouché en sommet de filet doit être inférieure ou égale aux 2/3 de la largeur du filet mesuré à mi-hauteur de celui-ci pour conserver une rigidité suffisante au niveau des poutres 63, 65, 64, 66.

Le rayon de 0,4 mm pour le fond de gorge permet de limiter les concentrations de contrainte en fond de gorge.

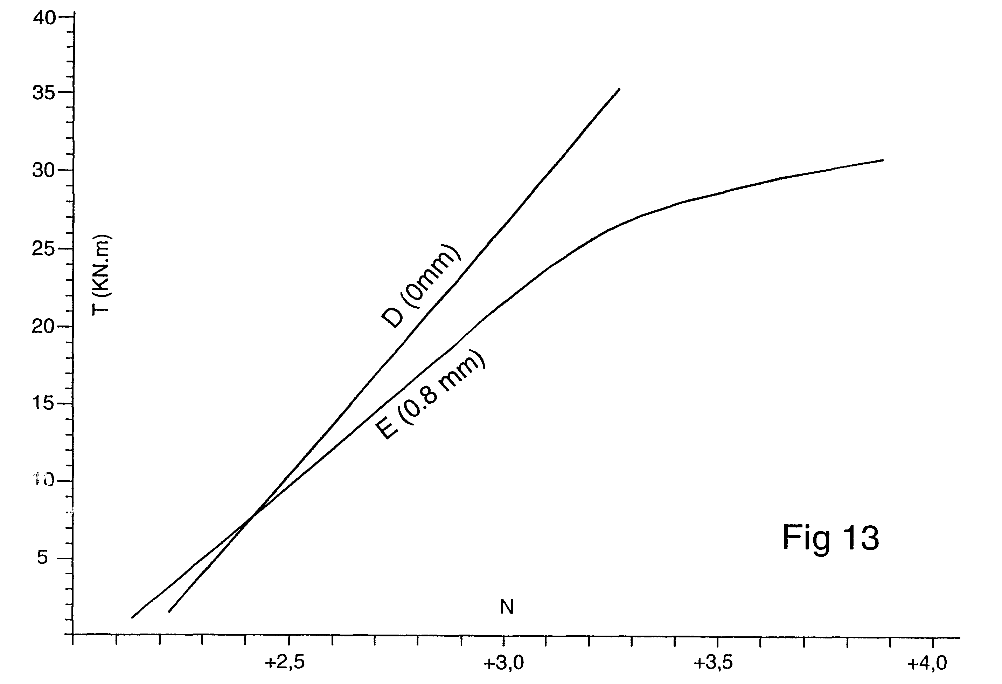

Comme le montre la courbe E de la figure 13, une telle structure de filets avec gorge permet de réaliser le vissage sous un couple nominal supérieur à la valeur minimale souhaitée pour la dimension considérée de tubes (27 kN.m : voir tableau 1). La courbe de couple de vissage présente un changement de pente dT/dN au-delà de 25 kN.m : la pente est de l'ordre de 24 kN.m/tour au départ et elle baisse au-dessus de 25 kN.m à environ 9 kN.m/tour, ce qui permet une auto-limitation du couple de vissage et un positionnement précis des butées et portées d'étanchéité. A titre de comparaison, la courbe D de la figure 13 relative à des filets similaires mais sans gorge présente une pente relativement constante de l'ordre de 40 kN.m/tour.

L'assemblage selon la présente invention peut être réalisé selon de nombreuses variantes, les quelques exemples de réalisation présentés n'étant nullement limitatifs.

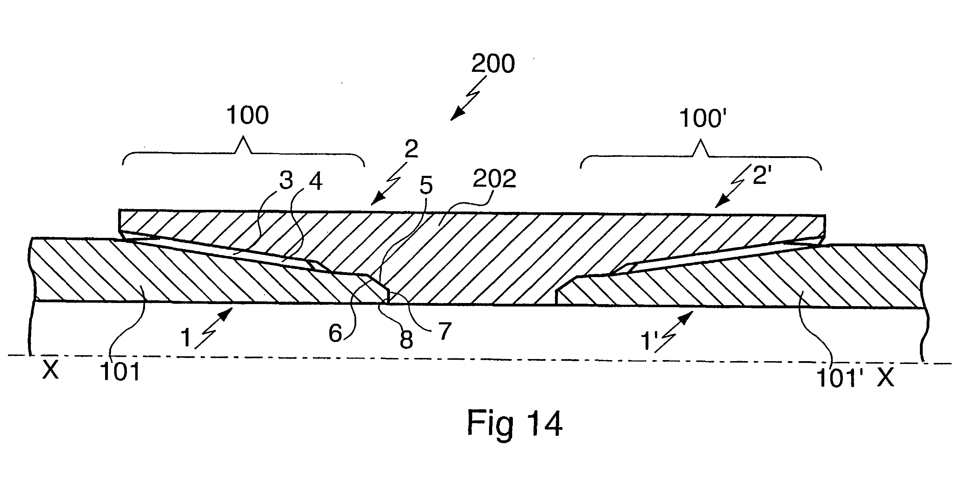

Notamment, la présente invention peut s'appliquer aussi bien à :
- un assemblage fileté dit intégral 100, un élément mâle 1 étant disposé en extrémité d'un premier tube métallique 101 de grande longueur et un élément femelle 2 étant disposé en extrémité d'un second tube métallique 102 également de grande longueur ;
- un assemblage fileté dit manchonné 200 représenté à la figure 14 dans lequel deux tubes métalliques 101, 101' de grande longueur comportant un élément mâle 1, 1' en extrémité sont assemblés par l'intermédiaire d'un manchon métallique 202 lequel est muni à chacune de ses extrémités d'un élément femelle 2, 2' , un tel assemblage fileté manchonné mettant en oeuvre deux assemblages filetés 100, 100' selon l'invention.

## Revendications

1. Assemblage fileté (100) de deux tubes métalliques comprenant un élément mâle (1) en extrémité d'un premier tube métallique vissé dans un élément femelle (2) en extrémité d'un second tube métallique, l'élément mâle (1) comportant extérieurement un filetage mâle (3) conique, à filets trapézoïdaux (11, 71, 31) comprenant deux flancs, à savoir un flanc porteur (13, 73, 33) et un flanc d'engagement (15, 75, 35), la largeur (*l3*) en sommet de filet mâle (17, 77, 39) étant inférieure à celle (*l1*) à la base du filet mâle, l'élément femelle (2) comportant intérieurement un filetage femelle (4) conique à filets trapézoïdaux (12, 72, 32) de forme conjuguée à celle du filetage mâle (3), la largeur des sommets de filet (*l3*, *l4*) sur chacun des filetages mâle et femelle étant supérieure à celle (*l6*, *l5*) des fonds de filet du filetage conjugué, **caractérisé en ce que** l'élément mâle (1) est positionné par vissage dans l'élément femelle (2) dans une position relative de ces deux éléments située au-delà de celle où, au cours du vissage, les deux flancs (13, 15, 73, 75, 33, 35) des filets mâles (11, 71, 31) arrivent en contact avec les deux flancs (14, 16, 74, 76, 34, 36) des filets femelles (12, 72, 32), de manière à induire un frettage axial des filets mâles par les filets femelles et réciproquement.

2. Assemblage fileté selon la revendication 1, **caractérisé en ce que** l'interférence diamétrale entre les sommets de filet (17, 20) de chacun des deux filetages mâle et femelle (3, 4) et les fonds de filet (18, 19) du filetage conjugué (4, 3) est négative ou nulle en fin de vissage.

3. Assemblage fileté selon la revendication 1 ou 2, **caractérisé en ce qu'**il subsiste un jeu radial (*x1*, *x2*) au moins égal à 0,15 mm entre sommets et fonds de filets conjugués lorsque les deux flancs (13, 15,) des filets mâles arrivent en contact avec leurs conjugués femelles (14, 16,) au cours du vissage.

4. Assemblage fileté selon la revendication 1, **caractérisé en ce que** l'interférence diamétrale entre les sommets de filet (77, 80) d'un seul des deux filetages, mâle ou femelle (3, 4) et les fonds de filet (78, 79) du filetage conjugué (4, 3) est positive en fin de vissage.

5. Assemblage fileté selon l'une quelconque des revendications 1 à 4, **caractérisé en ce que** l'angle δ entre flanc porteur (13, 14, 73, 74, 33, 34) et flanc d'engagement (15, 16, 75, 76, 35, 36) des filets mâle ou femelle est inférieur ou égal à 20°.

6. Assemblage fileté selon la revendication 5, **caractérisé en ce que** l'angle δ est compris entre 7 et 20°

7. Assemblage fileté selon l'une quelconque des revendications 1 à 6, **caractérisé en ce que**, pour chacun des filetages mâle et femelle (3, 4), les sommets de filet (17, 20, 77, 80, 39, 38) surplombent les fonds de filet (19, 18, 79, 78, 37, 40) du côté des flancs porteurs (13, 14, 73, 74, 33, 34), l'angle (α) entre lesdits flancs porteurs et la normale à l'axe de l'assemblage étant compris entre 0 et -15°.

8. Assemblage fileté selon l'une quelconque des revendications 1 à 7, **caractérisé en ce qu'**au moins un des filetages mâle et/ou femelle (3, 4) comporte une gorge (61, 62) débouchant en sommet de filet (39, 38) sur tout ou partie de la longueur du ou des filetages.

9. Assemblage fileté selon la revendication 8, **caractérisé en ce que** la gorge (61, 62) a une profondeur au plus égale à la hauteur de filet.

10. Assemblage fileté selon la revendication 8 ou 9, **caractérisé en ce que** la gorge (61, 62) possède une largeur à son débouché en sommet de filet (39, 38) au plus égale aux 2/3 de la largeur de filet mesurée à mi-hauteur de filet.

11. Assemblage fileté selon l'une quelconque des revendications 8 à 10, **caractérisé en ce que** la gorge (61, 62) possède un profil en U ou en V à fond arrondi.

12. Assemblage fileté selon l'une quelconque des revendications 1 à 11, **caractérisé en ce que** chacun des éléments mâle et femelle (1, 2) comprend au moins une portée d'étanchéité (5, 6), chaque portée d'étanchéité mâle (5) ayant une orientation sensiblement longitudinale et interférant radialement avec une portée d'étanchéité conjuguée femelle (6) en fin d'assemblage.

13. Assemblage fileté selon l'une quelconque des revendications 1 à 12, **caractérisé en ce que** chacun des éléments mâle et femelle (1, 2) comprend au moins une surface d'appui (7, 8) d'orientation sensiblement transversale, au moins une surface d'appui mâle (7) étant en butée avec une surface d'appui femelle (8) en fin d'assemblage.

14. Assemblage fileté (100) selon l'une quelconque des revendications 1 à 13, **caractérisé en ce qu'**il comprend un élément mâle (1) disposé en extrémité d'un premier tube métallique (101) de grande longueur et un élément femelle (2) disposé en extrémité d'un second tube métallique (102) également de grande longueur.

15. Utilisation de deux assemblages filetés (100, 100') selon l'une quelconque des revendications 1 à 13 pour assembler deux tubes métalliques (101, 101') de grande longueur qui comportent un élément mâle (1, 1') en extrémité par l'intermédiaire d'un manchon métallique (202) lequel est muni à chacune de ses extrémités d'un élément femelle (2, 2').

## Patentansprüche

1. Schraubverbindung (100) von zwei Metallrohren mit einem Einsteckelement (1) am Ende eines ersten Metallrohrs, das in ein Aufnahmeelement (2) am Ende eines zweiten Metallrohrs eingeschraubt wird, wobei das Einsteckelement (1) außen ein konisches Außengewinde (3) mit trapezförmigen Gewindegängen (11, 71, 31) aufweist, die zwei Flanken besitzen, d.h. eine Trägerflanke (13, 73, 33) und eine Eingriffsflanke (15, 75, 35), wobei die Breite (*l3*) am Scheitel des Außengewindegangs (17, 77, 39) geringer ist als diejenige (*l1*) an der Basis des Außengewindegangs, wobei das Aufnahmeelement (2) innen ein konisches Innengewinde (4) mit trapezförmigen Gewindegängen (12, 72, 32) aufweist, deren Form derjenigen des Außengewindes (3) entspricht, wobei die Breite der Gewindegangscheitel (*l3*, *l4*) auf jedem der Außen- und Innengewinde größer ist als diejenige (*l6*, *l5*) der Gewindeganggründe des entsprechenden Gewindes, **dadurch gekennzeichnet, dass** das Einsteckelement (1) durch Schraubverbindung im Aufnahmeelement (2) in einer relativen Position dieser beiden Elemente positioniert wird, die sich jenseits derjenigen befindet, in der während des Schraubvorgangs die beiden Flanken (13, 15, 73, 75, 33, 35) der Außengewindegänge (11, 71, 31) mit den beiden Flanken (14, 16, 74, 76, 34, 36) der Innengewindegänge (12, 72, 32) in Kontakt gelangen, um eine axiale Hemmung der Außengewinde durch die Innengewinde und umgekehrt zu erzeugen.

2. Schraubverbindung nach Anspruch 1, **dadurch gekennzeichnet, dass** die diametrale Interferenz zwischen den Gewindegangscheiteln (17, 20) jedes der beiden Außen- und Innengewinde (3, 4) und den Gewindeganggründe (18, 19) des entsprechenden Gewindes (4, 3) am Ende des Schraubvorgangs negativ oder null ist.

3. Schraubverbindung nach Anspruch 1 oder 2, **dadurch gekennzeichnet, dass** ein radiales Spiel (*x1, x2*) mindestens gleich 0,15 mm zwischen entsprechenden Gewindegangscheiteln und Gewindeganggründe verbleibt, wenn die beiden Flanken (13, 15) der Außengewindegänge mit ihren entsprechenden Innengewindegängen (14, 16) während des Schraubvorgangs in Kontakt gelangen.

4. Schraubverbindung nach Anspruch 1, **dadurch gekennzeichnet, dass** die diametrale Interferenz zwischen den Gewindegangscheiteln (77, 80) eines einzigen der Außen- oder Innengewinde (3, 4) und den Gewindeganggründen (78, 79) des entsprechenden Gewindes (4, 3) am Ende des Schraubvorgangs positiv ist.

5. Schraubverbindung nach einem der Ansprüche 1 bis 4, **dadurch gekennzeichnet, dass** der Winkel δ zwischen der Trägerflanke (13, 14, 73, 74, 33, 34) und der Eingriffsflanke (15, 16, 75, 76, 35, 38) des Außen- oder Innengewindes geringer als oder gleich 20° ist.

6. Schraubverbindung nach Anspruch 5, **dadurch gekennzeichnet, dass** der Winkel δ zwischen 7 und 20° liegt.

7. Schraubverbindung nach einem der Ansprüche 1 bis 6, **dadurch gekennzeichnet, dass** bei jedem der Außen- und Innengewinde (3, 4) die Gewindegangscheitel (17, 20, 77, 80, 39, 38) auf der Seite der Trägerflanken (13, 14, 73, 74, 33, 34) die Gewindeganggründe (19, 18, 79, 78, 37, 40) überlagern, wobei der Winkel (α) zwischen den Trägerflanken und der Senkrechten zur Achse der Verbindung zwischen 0 und -15° liegt.

8. Schraubverbindung nach einem der Ansprüche 1 bis 7, **dadurch gekennzeichnet, dass** mindestens eines der Außen- und/oder Innengewinde (3, 4) eine Kehle (61, 62) aufweist, die am Gewindegangscheitel (39, 38) über die ganze oder einen Teil der Länge der Gewinde mündet.

9. Schraubverbindung nach Anspruch 8, **dadurch gekennzeichnet, dass** die Kehle (61, 62) eine Tiefe aufweist, die höchstens gleich der Gewindeganghöhe ist.

10. Schraubverbindung nach Anspruch 8 oder 9, **dadurch gekennzeichnet, dass** die Kehle (61, 62) an ihrer Öffnung am Gewindegangscheitel (39, 38) eine Breite aufweist, die höchstens gleich 2/3 der Breite des Gewindegangs, gemessen auf halber Höhe des Gewindegangs, ist.

11. Schraubverbindung nach einem der Ansprüche 8 bis 10, **dadurch gekennzeichnet, dass** die Kehle (61, 62) ein U-förmiges oder V-förmiges Profil mit abgerundetem Boden aufweist.

12. Schraubverbindung nach einem der Ansprüche 1 bis 11, **dadurch gekennzeichnet, dass** jedes der Einsteck- und Aufnahmeelemente (1, 2) mindestens eine Dichtungslagerfläche (5, 6) aufweist, wobei jede Einsteck-Dichtungslagerfläche (5) im wesentlichen eine Längsausrichtung hat und am Ende der Verbindung radial mit einer entsprechenden Aufnahme-Dichtungslagerfläche (6) interferiert.

13. Schraubverbindung nach einem der Ansprüche 1 bis 12, **dadurch gekennzeichnet, dass** jedes der Einsteck- und Aufnahmeelemente (1, 2) mindestens eine Auflagefläche (7, 8) mit im wesentlichen einer Querausrichtung aufweist, wobei mindestens eine Einsteck-Auflagefläche (7) am Ende des Zusammenbaus auf einer Aufnahme-Auflagefläche (8) in Anschlag liegt.

14. Schraubverbindung (100) nach einem der Ansprüche 1 bis 13, **dadurch gekennzeichnet, dass** sie ein Einsteckelement (1), das am Ende eines ersten Metallrohrs (101) großer Länge angeordnet ist, und ein Aufnahmeelement (2) aufweist, das am Ende eines zweiten Metallrohrs (102) von ebenfalls großer Länge angeordnet ist.

15. Verwendung von zwei Schraubverbindungen (100, 100') nach einem der Ansprüche 1 bis 13 zur Verbindung von zwei Metallrohren (101, 101') großer Länge, die am Ende ein Einsteckelement (1, 1') aufweisen, mit Hilfe einer Metallmuffe (202), die an jedem ihrer Enden mit einem Aufnahmeelement (2, 2') versehen ist.

## Claims

1. A threaded connection (100) for two metal pipes, comprising a male element (1) at the end of a first metal pipe screwed into a female element (2) at the end of a second metal pipe, the male element (1) comprising an external male tapered thread (3) with trapezoidal threads (11, 71, 31) comprising two flanks, namely a load flank (13, 73, 33) and a stabbing flank (15, 75, 35), the thread width (l *3*) at the male thread crest (17, 77, 39) being less than the thread width (I *1*) at the root of the male thread, the female element (2) comprising an internal tapered female thread (4) with trapezoidal threads (12, 72, 32) with a form which mates with the male thread (3), the width of the thread crests (l *3*, l *4*) on each of the male and female threads being higher than that (l *6*, l *5*) of the mating thread roots, **characterized in that** the male element (1) is positioned by screwing into the female element (2) to a relative position of these two elements located beyond that where, during makeup, the two flanks (13, 15, 73, 75, 33, 35) of the male threads (11, 71, 31) come into contact with the two flanks (14, 16, 74, 76, 34, 36) of the female threads (12, 72, 32) so as to induce an axial interference fit of the male threads by the female threads and vice versa.

2. A threaded connection according to claim 1, **characterized in that** the diametrical interference between the thread crests (17, 20) of each of the two male and female threads (3, 4) and the thread roots (18, 19) of the mating thread (4, 3) is negative or zero when makeup is complete.

3. A threaded connection according to claim 1 or claim 2, **characterized in that** an axial clearance (x1, x2) of at least 0.15 mm subsists between the mated thread crests and roots when the two flanks (13, 15) of the male threads come into contact with their female mates (14, 16) during makeup.

4. A threaded connection according to claim 1, **characterized in that** the diametrical interference between the thread crests (77, 80) of one of the two male or female threads (3, 4) and the thread roots (78, 79) of the mating thread (4, 3) is positive at the end of connection makeup.

5. A threaded connection according to any one of claims 1 to 4, **characterized in that** the angle δ between the load flank (13, 14, 73, 74, 33, 34) and the stabbing flank (15, 16, 75, 76, 35, 36) of the male or female threads is 20° or less.

6. A threaded connection according to claim 5, **characterized in that** the angle δ is in the range 7° to 20°.

7. A threaded connection according to any one of claims 1 to 6, **characterized in that** for each of the male and female threads (3, 4) the thread crests (17, 20, 77, 80, 39, 38) overhang the thread roots (19, 18, 79, 78, 37, 40) on the load flank side (13, 14, 73, 74, 33, 34), the angle (α) between said load flanks and the normal to the connection axis being in the range 0 to -15°.

8. A threaded connection according to any one of claims 1 to 7, **characterized in that** at least one of the male and/or female threads (3, 4) comprises a groove (61, 62) opening into the thread crest (39, 38) over all or a portion of the thread length.

9. A threaded connection according to claim 8, **characterized in that** the depth of the groove (61, 62) is at most equal to the thread depth.

10. A threaded connection according to claim 8 or claim 9, **characterized in that** the width of the groove (61, 62) at its opening into the thread crest (39, 38) is at most 2/3 of the width of the thread measured at the thread mid-depth.

11. A threaded connection according to any one of claims 8 to 10, **characterized in that** the groove (61, 62) has a profile in the shape of a U or a profile in the shape of a V with a rounded base.

12. A threaded connection according to any one of claims 1 to 11, **characterized in that** each of the male and female elements (1, 2) comprise at least one sealing surface (5, 6), each male sealing surface (5) having a substantially longitudinal orientation and radially interfering with a mating female sealing surface (6) when makeup is complete.

13. A threaded connection according to any one of claims 1 to 12, **characterized in that** each of the male and female elements (1, 2) comprise at least one bearing surface (7, 8) with a substantially transverse orientation, at least one male bearing surface (7) being abutted with a female bearing surface (8) when makeup is complete.

14. A threaded connection (100) according to any one of claims 1 to 13, **characterized in that** it comprises a male element (1) disposed at the end of a first long metal pipe (101) and a female element (2) disposed at the end of a second long metal pipe (102).

15. Use of two threaded connections (100, 100') according to any one of claims 1 to 13 to connect two long metal pipes (101, 101') which comprise a male element (1, 1') at their end via a metal coupling (202) which is provided with a female element (2, 2') at each of its ends.
